Europäisches Patentamt

European Patent Office

Office européen des brevets

(11) Veröffentlichungsnummer: **0 268 778**
**A2**

(19)

(12) # EUROPÄISCHE PATENTANMELDUNG

(21) Anmeldenummer: 87114006.7

(22) Anmeldetag: 25.09.87

(51) Int. Cl.⁴: **F41G 3/22** , G02B 23/08

(30) Priorität: **27.09.86 DE 3632923**

(43) Veröffentlichungstag der Anmeldung:
**01.06.88 Patentblatt 88/22**

(84) Benannte Vertragsstaaten:
**CH DE FR GB IT LI NL**

(71) Anmelder: **Firma Carl Zeiss**

**D-7920 Heidenheim (Brenz)(DE)**

(84) **CH DE FR IT LI NL**

(71) Anmelder: **CARL-ZEISS-STIFTUNG trading as CARL ZEISS**

**D-7920 Heidenheim (Brenz)(DE)**

(84) **GB**

(72) Erfinder: **Leinhos, Roland**
**Europaring 63**
**D-5300 Bonn 1(DE)**
Erfinder: **Poxleitner, Martin**
**Pestalozzistrasse 1**
**D-7923 Königsbronn(DE)**
Erfinder: **Stana, Hans**
**Weingartenstrasse 59**
**D-7082 Oberkochen(DE)**
Erfinder: **Weinheimer, Hans-Richard, Dr.**
**Meisenweg 9**
**D-7923 Königsbronn(DE)**
Erfinder: **Wittekindt, Norbert**
**Reuchlinstrasse 4**
**D-7080 Aalen(DE)**

(54) **Sichtgeräte in Modulbauweise für Kampfwagen.**

(57) Für die Sichtgeräte von Kampfwagen wird eine funktionsbezogene, verschleiß- und nachrüstungsorientierte Aufgliederung in Einzelkomponenten (Module) mit standardisierten Schnittstellen angegeben. Durch die Aufgliederung werden die Kosten in der Entwicklung, in der Beschaffung und in der Nutzungsphase ver mindert, die Lagerhaltung vereinfacht und kampfwertsteigernde Ergänzungen ermöglicht.

EP 0 268 778 A2

Fig. 2

1a.

## Sichtgeräte in Modulbauweise für Kampfwagen

Die Erfindung betrifft Sichtgeräte für Kampfwagen

Kampfwagen haben je nach ihrer Hauptauslegung verschiedene Aufgaben im Rahmen eines Verteidigungskonzeptes. Zu einer Familie von gepanzerten Kampfwagen gehören Kampfpanzer, Schützenkampfwagen Panzerabwehrkampfwagen, Flakpanzer u.a..

Für die Feuerleitsysteme dieser gepanzerten Fahrzeuge werden leistungsfähige Tag-und Nacht-Sehsysteme mit Rundblickmöglichkeit und stabilisierter Ausblickachse gefordert. Neben den rundblickenden Periskopen werden Zielperiskope mit eingeschränktem Seitenrichtbereich und Zusatzgeräte wie z.B. Zielfernrohre und Winkelspiegel gefordert. Zielperiskope können im Gegensatz zu den Rundblickperiskopen auch mit jeweils eigenen Strahlengängen und den Spektralbereichen angepaßten Eintrittspupillen für Tagsicht, Nachtsicht und Laser-Entfernungsmessung ausgestattet werden. Die taktischen Anforderungen an Kampfwagen lassen verschiedene Sichtgeräte-Konzepte für die einzelnen Fahrzeuge zu. Für fast alle Fahrzeuge wird eine Rundblickmöglichkeit für den Kommandanten gefordert. Eine Breitbandoptik ist für Tag-Wärme-Rundblickperiskope im Hinblick auf kompakte Bauweise entscheidend und unverzichtbar.

Eine Gegenüberstellung aller Bewertungsparameter eines Spezialgerätes und eines modular aufgebauten Gerätes zeigen die Vorteile der Module:

|  | Modularer Geräteaufbau | Spezialgerät (herkömmliche Bauart) |
|---|---|---|
| Entwicklungskosten Gerätefamilie | geringer | höher |
| Komplexität | höher | geringer |
| Gerätevolumen | größer | kleiner |
| Leistungsfähigkeit | gleich | gleich |
| Serienpreis | niedriger | höher |
| Systempreis | niedriger | höher |
| Ersatzteile, Sonderwerkzeuge, Prüfmittel | niedriger | höher |
| Materialerhaltung | einfacher | schwieriger |
| Beschreibung | billiger | teurer |
| Nachrüstung | leichter | schwieriger |
| Schulungsaufwand | niedriger | höher |

In herkömmlicher Bauart werden die Sichtgeräte in ihrem Aufbau und ihren Abmessungen den Fahrzeuggegebenheiten angepaßt und in vorhandene, "Freiräume" hineinkonstruiert. Dieses Vorgehen bedingt für jeden Typ einer Fahrzeugfamilie oder Kampfwagenfamilie spezielle Sichtgeräte, und durch die Vielfalt der Sichtgeräte einer Fahrzeugfamilie hohe Investitions-, Ersatz-und gegebenenfalls Umrüstungskosten.

Die nachfolgende Tabelle 1 gibt beispielhaft einen Überblick über die in den verschiedenen Fahrzeugen einer Kampfwagenfamilie verwendeten Sehsysteme.

Tabelle 1

Rundblickperiskope

    PERI - RT 72
    PERI - RTW 90
    PERI - RTW 120
    PERI - RTWL 120


Zielperiskope

    PERI - ZT 72
    PERI - ZTWL 72/120
    PERI - ZTWL 72/120 (60)
    PERI - ZTWL 72/250


Plattformgeräte    ZTWL 100/250

Zielfernrohre
Fahrersichtgeräte
Winkelspiegel
Monitore

Dabei bedeutet: PERI Periskop
    R Rundblickeinrichtung
    Z Zieleinrichtung
    T Tagsicht
    W Wärmebild
    L Laserentfernungsmeßkomponente
72/90/100/120/250 Eintrittspupillendurchmesser


    Der Erfindung liegt die Aufgabe zugrunde, trotz der unterschiedlichen Anforderungen an die Sichtgeräte einer Kampfwagenfamilie möglichst viele gemeinsame Baugruppen zu erarbeiten und die Leistungen der Sichtgeräte aufeinander abzustimmen, um ihre Lebenswegkosten zu reduzieren die Materialerhaltung zu vereinfachen und Nachrustungen mit leistungssteigernden Komponenten zu verbilligen.

    Diese Aufgabe wird erfindungsgemäß durch eine funktionsbezogene, verschleiß-und nachrüstungsorientierte Aufgliederung der Sichtgeräte in Einzelkomponenten (Module) mit standardisierten Schnittstellen gelöst, wobei je eine Modulreihe für den Geräteschutz, für die Stabilisierung der Visierlinie in Höhe, fur die Stabilisierung der Visierlinie in Seitenrichtung, für die in Optikbaugruppen der Tagsichtgeräte, für die Optiksysteme der Fernrohre, für die Nachtsichtmittel, für die Entfernungsmesser und für die Fernsehsysteme und für Zusatzgeräte vorgesehen sind.

    Die Aufgliederung der Modulreihen und ihr Einsatz bei den verschiedenen Sichtgeräten ist den nachfolgenden Tabellen 2-5 zu entnehmen. Bei der Entwicklung der Module stand neben der konstruktiven Realisierbarkeit die Frage der Häufung des zu realisierenden Moduls im Vordergrund. Aus Platzgründen (Silhouette, Turmdurchbruch usw) wurden einzelne modulare Baugruppen in unterschiedliche Größen abgestuft, wodurch sich die Anzahl der Einzelmodule erhöht. Dennoch ist aus den Tabellen ersichtlich, daß es gelungen ist, Häufungen einzelner Module in den verschiedenen Sichtgeräten zu erreichen. In der ersten Spalte der Tabellen sind die Bezeichnungen der Module eingetragen, in der zweiten Spalte ihre Bezugszeichen in der nachfolgenden Zeichnung. In der oberen Zeile sind die Sichtgeräte (Rundblick-, Zielperiskope und Plattformgeräte) angeführt. Durch die Anzahl der "Kreuze" in einer Zeile kann abgelesen werden, in welchen Geräten der jeweilige Modul verwendet wird.

0 268 778

Tabelle 2

| Module und ihre Verwendung in Kampfwagen-Sichtgeräten | | Rundblickperiskope | | | | Zielperiskope | | | | Plattformgeräte | |
|---|---|---|---|---|---|---|---|---|---|---|---|
| Modulreihe/ Bezeichnung | Modulkennummer | PERI-RT 72 | PERI-RTW 90 | PERI-RTW 120 | PERI-RTWL 120 | PERI-ZT 72 | PERI-ZTWL 72/120 | PERI-ZTWL 72/120 60 | PERI-ZTWL 72/250 | ZTWL-100/250 | |
| **1 Geräteschutz** | | | | | | | | | | | |
| 11 Schutzhaube | 111 | X | X | | | | | | | | |
| | 112 | | | X | X | | | | | | |
| 12 Schutzhaubenantrieb | 121 | X | X | | | | | | | | |
| | 122 | | | X | X | | | | | | |
| 13 Blende | 131 | | X | X | X | | X | X | | | |
| | 132 | X | X | X | X | X | X | X | X | X | |
| **2 Stabilisierung Höhe** | | | | | | | | | | | |
| 20 Höhenrichtachse | 201 | | X | | | | | | | | |
| | 202 | X | | | | | | | | | |
| | 203 | | | X | X | | | | | | |
| | 204 | | | | | X | X | X | | | |
| 21 Antrieb | 211 | X | X | X | X | X | X | X | | | |
| 22 Kreisel | 221 | X | X | X | X | X | X | X | X | | |
| 23 Gegenlager | 231 | X | X | X | X | X | X | X | X | | |
| 24 Ablenker | 241 | | | | | | X | X | | | |
| | 242 | X | | | | X | X | X | X | | |
| | 243 | | X | | | | | | | | |
| | 244 | | | X | X | | X | X | | | |

0 268 778

**Tabelle 3**

### Module und ihre Verwendung in Kampfwagen-Sichtgeräten

| Modulreihe/ Bezeichnung | Modulkennnummer | Rundblickperiskope | | | | | Zielperiskope | | | | Plattformgeräte |
|---|---|---|---|---|---|---|---|---|---|---|---|
| | | PERI-RT 72 | PERI-RTW 90 | PERI-RTW 120 | PERI-RTWL 120 | PERI-ZT 72 | PERI-ZTWL 72/120 | PERI-ZTWL 72/120 60 | PERI-ZTWL 72/250 | ZTWL 100/250 | |
| **3 Stabilisierung Seite** | | | | | | | | | | | |
| 31 Seitenrichtachse | 311 | X | X | | | | | | | | |
| | 312 | | | X | X | | | | | | |
| | 316 | | | | | X | X | X | | | |
| 32 Schleifring | 321 | X | X | | | | | | | | |
| | 322 | | | X | X | | | | | | |
| **4 Optikbaugruppen** | | | | | | | | | | | |
| 41 Laser Aufweite Optik | 411 | | | | X | | X | X | X | X | |
| 42 Vergrößerungswechsler | 421 | X | X | X | X | X | X | X | | | |
| | 426 | | X | X | X | | X | | | | |
| 43 Bildaufrichtung | 431 | X | X | X | X | | | | | | |
| | 432 | | X | X | X | | | | | | |
| 44 Strahlteiler | 441 | | | | | | | | | | |
| | 442 | | X | X | X | | | | | | |
| 45 Zielmarke | 451 | X | X | X | X | | | | | | |
| 46 Feldjustierung | 461 | | | | X | | X | X | | | |
| 47 Okular | 471 | X | X | X | X | X | X | X | X | | |

**Module und ihre Verwendung in Kampfwagen-Sichtgeräten**

| Modulreihe/ Bezeichnung | Modulkennnummer | Rundblickperiskope | | | | Zielperiskope | | | | Plattformgeräte | |
|---|---|---|---|---|---|---|---|---|---|---|---|
| | | PERI-RT 72 | PERI-RTW 90 | PERI-RTW 120 | PERI-RTWL 120 | PERI-ZT 72 | PERI-ZTWL 72/120 | PERI-ZTWL 72/120 60 | PERI-ZTWL 72/250 | ZTWL 100/250 | |
| **5  Optiksystem** | | | | | | | | | | | |
| 51 Fernrohr | 511 | X | | | | X | X | X | X | X | |
| | 512 | | X | | | | | | | | |
| | 513 | | | X | X | | | | | | |
| | 514 | | | | | | X | X | | | |
| | 515 | | | | | | | | X | X | |
| **6  Nachtsichtmittel** | | | | | | | | | | | |
| 61 Warmebildsystem | 611 | | | | | | | X | | | |
| | 612 | | X | X | X | | X | | | | |
| | 613 | | | | | | | X | X | | |
| 62 Bildverstärkergerät | 621 | | | | | | | | | | |
| | 622 | | | | | | | | | | |
| **7  Entfernungsmesser** | | | | | | | | | | | |
| 71 Laser-Sender | 711 | | | | | | | | | | |
| | 712 | | | | X | | X | X | X | X | |

Tabelle 4

| Module und ihre Verwendung in Kampfwagen-Sichtgeräten | | Rundblickperiskope | | | | Zielperiskope | | | | Plattformgeräte |
|---|---|---|---|---|---|---|---|---|---|---|---|
| Modulreihe/ Bezeichnung | Modulkennnummer | PERI-RT 72 | PERI-RTW 90 | PERI-RTW 120 | PERI-RTWL 120 | PERI-ZT 72 | PERI-ZTWL 72/120 | PERI-ZTWL 72/120 60 | PERI-ZTWL 72/250 | ZTWL 100/250 | |
| **8 Fernsehsysteme** | | | | | | | | | | | |
| 80 Fernsehkamerasystem | 801 | | | | | | | | X | | |
| 81 Fernsehkamera | 811 | | | | | | | | X | | |
| 82 Kameravorsatz | 821 | | | | | | | | X | | |
| 83 Monitor | 831 | | | | | | | | | | |
| | 832 | | X | X | X | | X | X | X | X | |
| **9 Zusatzgerät** | | | | | | | | | | | |
| 91 Zielfernrohr | 911 | | | | | | | | | | |
| | 917 | | | | | | | | | | |
| | 918 | | | | | | | | | | |
| | 919 | | | | | | | | | | |
| 92 Winkelspiegel | 921 | | | | | | | | | | |
| | | | | | | | | | | | |

Tabelle 5

0 268 778

Bisher wurden für die Realisierung der derzeitig bekannten Funktionen von Sicht-und Zielperiskopen entsprechend den Tabellen 2-5 eine Gesamtzahl von 45 Modulen definiert. Bei Technologieerweiterung kann diese Liste mit entsprechenden Konstruktionen ergänzt werden.

Die mit der Erfindung erzielten Vorteile bestehen insbesondere darin, daß durch den Einsatz baugleicher Geräte oder Komponenten für die verschiedenen Träger die Kosten in der Entwicklung, in der Beschaffung und in der Nutzungsphase vermindert werden können. Durch die große Menge einzelner Baugruppen oder Komponenten können in verstärktem Maße Sonderbetriebsmittel und automatisierte Prüfgeräte eingesetzt werden, wodurch neben den günstigeren Kosten auch eine höhere, gleichbleibende Qualität erzielt werden kann. Auch auf die Beschaffung der Prüfgeräte für die verschiedenen Materialhaltungsstufen macht sich die Gleichheit von Baugruppen positiv bemerkbar. In der Nutzungsphase kommen die Vorteile des modularen Aufbaus der Materialerhaltung und Logistik zugute. Die Ausbildung wird vereinfacht und trotz prozentual gleicher Bevorratung der Ersatzteile wird die Lagerhaltung in den Depots und Instandsetzungs-Werken vereinfacht. Bei einem modularen Sichtgeräte-Konzept wird auch das Volumen der Elektronikeinheiten reduziert und entsprechend der Sichtmodule in Elektronikmodule aufgegliedert.

Aus den erfindungsgemäßen Modulen lassen sich auch ohne Schwierigkeiten Zielperiskope, die für den Einbau in Kuppeln geeignet sind, aufbauen.

Ein weiterer Vorteil der Erfindung liegt darin, daß Kampffahrzeuge, die aus finanziellen Gründen zunächst mit Sichtgeräten ausgerüstet waren, die nicht der maximal möglichen Leistungsstufe entsprechen, bei modularer Bauweise in später folgenden Kampfwertsteigerungen durch die standardisierten Schnittstellen einfach ergänzt werden können. Z.B. kann ein Zielperiskop, das zunächst nur mit einem Tagkanal ausgestattet ist, später leicht durch Hinzufügen von Wärmebildmodulen und/oder Entfernungsmeß modulen erweitert oder ergänzt werden.

Ausführungsbeispiele der Erfindung sind in der Zeichnung dargestellt und werden im folgenden näher beschrieben. Es zeigen

Fig. 1 die perspektivische Darstellung eines Periskops mit Rundblickeinrichtung, Tagsicht-, Wärmebild-und Laser-Entfernungsmeßkomponente;

Fig. 1a den prinzipiellen Aufbau eines Rundblicksperiskops;

Fig. 2 den modularen Aufbau des in Fig. 1 dargestellten Periskops;

Fig. 3 die perspektivische Darstellung eines Periskops mit Zieleinrichtung, Tagsicht-, Wärmebild-und Laser-Entfernungsmeßkomponente, (Parallelaufbau);

Fig. 3a den prinzipiellen Aufbau eines Zielperiskops;

Fig. 4 den modularen Aufbau des in Fig. 3 dargestellten Periskops;

Fig. 5 Detailzeichnung des Antriebsmoduls 211;

Fig. 6 Detailzeichnung des Kreiselmoduls 221;

Fig. 7 Detailzeichnung des Lagermoduls 231;

Fig. 8 Detailzeichnung des Ablenkmoduls 244;

Fig. 9 Detailzeichnung des Moduls Laser-Galilei 411;

Fig. 10 Detailzeichnung des Zielmarkenmoduls 451;

Fig. 11 Detailzeichnung des Feldjustiermodul 461;

Fig. 12 Detailzeichnung des Moduls Afokal 513.

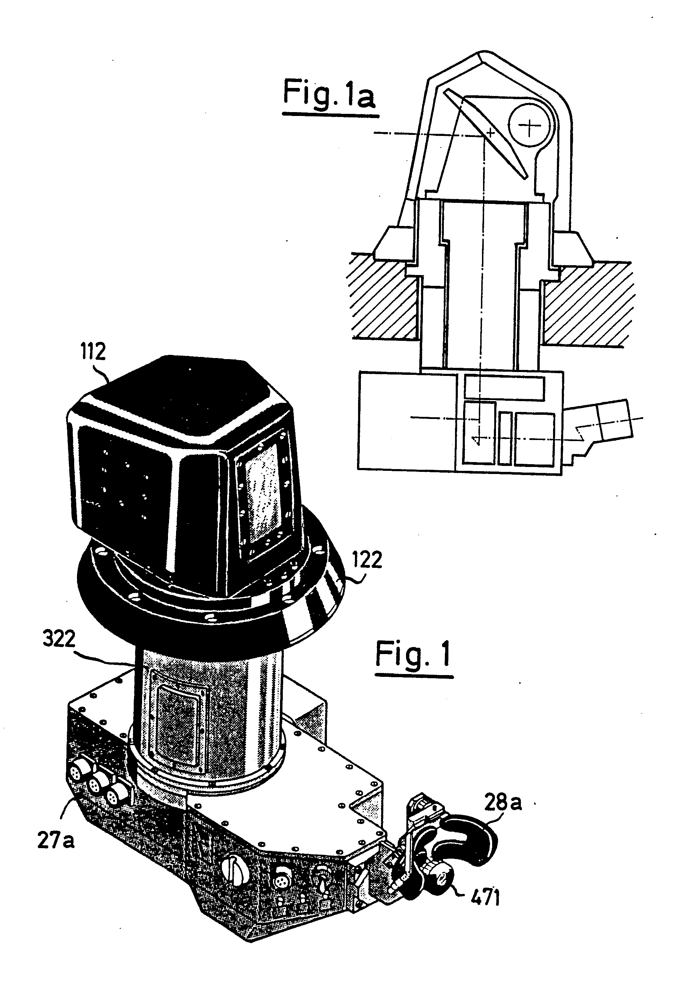

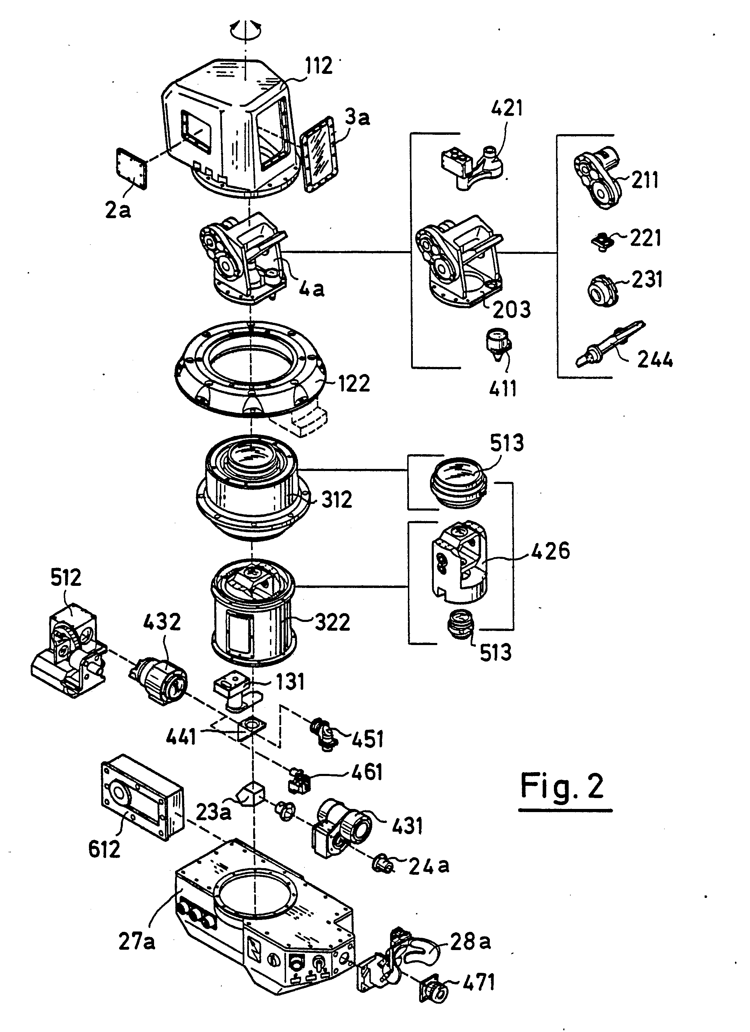

In der Fig. 1 sind für die dargestellten Module die gleichen Bezugszeichen gewählt wie in der Darstellung der Fig. 2.

Legende zu Figur 2

| Modulare Komponenten: | Modulnummer (Bezugzeichen): |
|---|---|
| Haubenmodul | 112 |
| Modul V-Wechsler VIS | 421 |
| Höhenrichtmodul | 203 |
| Modul Laser-Galilei | 411 |
| Antriebsmodul | 211 |
| Kreiselmodul | 221 |
| Lagermodul | 231 |
| Ablenkmodul | 244 |
| Haubenantriebsmodul | 122 |
| Seitenrichtmodul | 312 |
| Modul Afokal | 513 |
| Schleifringmodul | 322 |
| Modul V-Wechsler IR | 426 |
| Abfeuerblendmodul | 131 |
| Modul Strahlteiler IR-VIS | 441 |
| Zielmarkenmodul | 451 |
| Bildaufrichtemodul IR | 432 |
| Wärmebildmodul | 612 |
| Feldjustiermodul | 461 |
| Bildaufrichtemodul VIS | 431 |
| Pulslasermodul $CO_2$ | 712 |
| Okularmodul | 471 |

Nichtmodulare Komponenten:
- 2a    Deckel
- 3a    Abschlußscheibe
- 4a    Höhenrichtbaugruppe
- 23a   Pentaprisma
- 24a   Anpaßoptik
- 27a   Gehäuseunterteil
- 28a   Stirnstutze mit Anpaßoptik

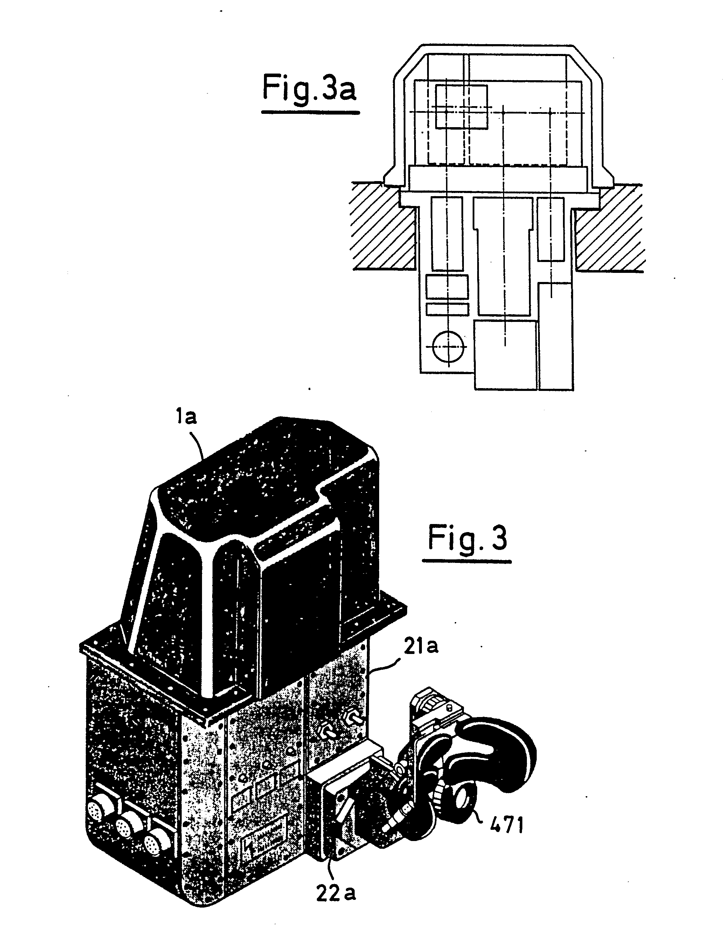

Die in den Abbildungen der Fig. 1a und 3a gezeigten Rundblick-und Zielperiskope bestehen aus:

einem Oberteil, das einen Ausblickkopf mit Höhenrichtachse ggf. mit separatem Antrieb, enthält;

einem Mittelteil mit tragender Struktur, bei Rundblickperiskopen mit Seitenrichtachse, bei Schaltgeräten mit Seitenrichtantrieb (eingeschr. Bereich), Hauptoptik mit Vergrößerungswechsler;

einem Unterteil, bei dem je nach Anforderung eine Trennung zwischen IR-und visueller Optik vorgesehen ist und das einen Wärmebildsensor, Laser-Baugruppen, Bildaufrichtung, Feldjustierung, Abfeuerblende, Nuklearblitzschutz, optische und elektrooptische Wiedergabebaugruppen enthält.

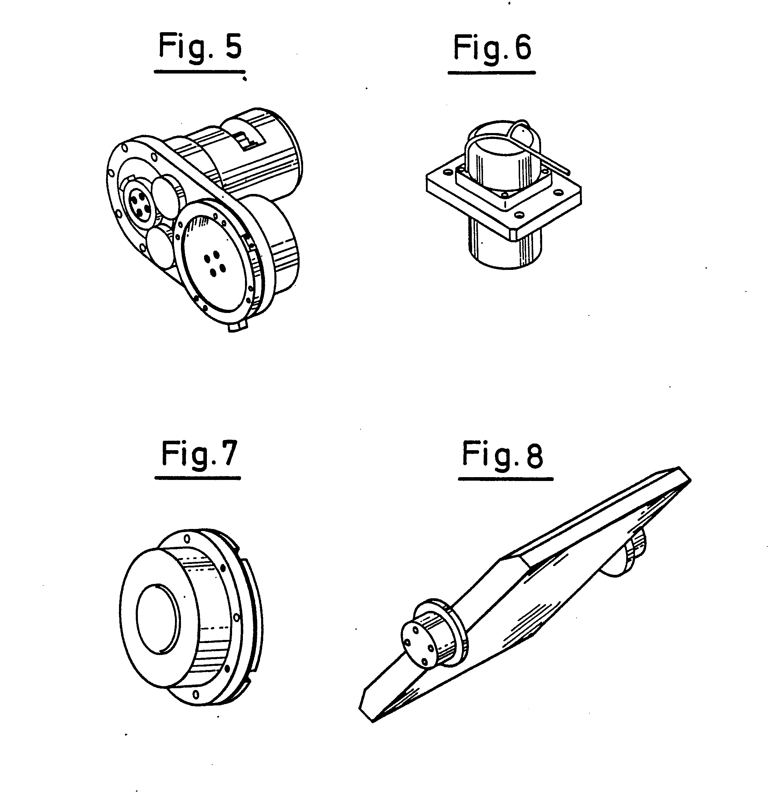

In den Fig. 5 - 12 sind beispielhaft einige Module des in den Fig. 1 und 2 dargestellten Periskops als Detailszeichnung und mit Maßangaben gezeigt.

Der in Fig. 5 dargestellte Antriebsmodul ist der Antrieb der Ablenkmodule (Spiegel, Prisma) des in den Fig. 1 und 2 dargestellten Periskops. Er enthält den Kreiselmodul (221), ein Bandgetriebe mit einer Übersetzung von 2:1, ein Festlager der Höhenrichtachse, einen Torque-Motor und den Stellungsgeber.

Die Maße sind:

Länge      190 mm
Breite     145 mm
Höhe       100 mm
Gewicht    7 kg

Der in Fig. 6 dargestellte Kreiselmodul (221) besteht aus einem handelsüblichen Kreisel (Wende-oder Lagekreisel) und einer Montageplatte. Er sensiert Bewegungen in zwei Achsen nach Geschwindigkeit bzw. Lage.

Die Maße sind:

Länge      50 mm
Breite     40 mm
Höhe       52 mm
Gewicht    0,25 kg

Der Kreiselmodul ist in allen Antriebsmodulen der Sichtperiskope universell verwendbar.

Der Lagermodul (231) der Fig. 7 ist ein Loslager (Stützlager), das in Verbindung mit dem Antriebsmodul (211) der Höhenrichtachse den Ablenkmodul trägt. Er enthält eine vorgespannte Lagerkombination (Duplexanordnung) im Montageflansch.

Die Maße sind:

Gesamtdurchmesser      100 mm
Höhe       30 mm
Gewicht    1,2 kg

Der Lagermodul wird in allen Höhenrichtmodulen der Periskope verwendet.

Der Ablenkmodul (244) der Fig. 8 lenkt ein Strahlenbündel bis zu 120 mm Durchmesser ab. Er besteht aus einem Spiegel mit 125 mm $\times$ 220 mm Kantenlänge und zwei Flanschteilen.

Die Maße sind:

Länge      220 mm
Breite     163 mm
Höhe       40 mm
Gewicht    1,85 kg

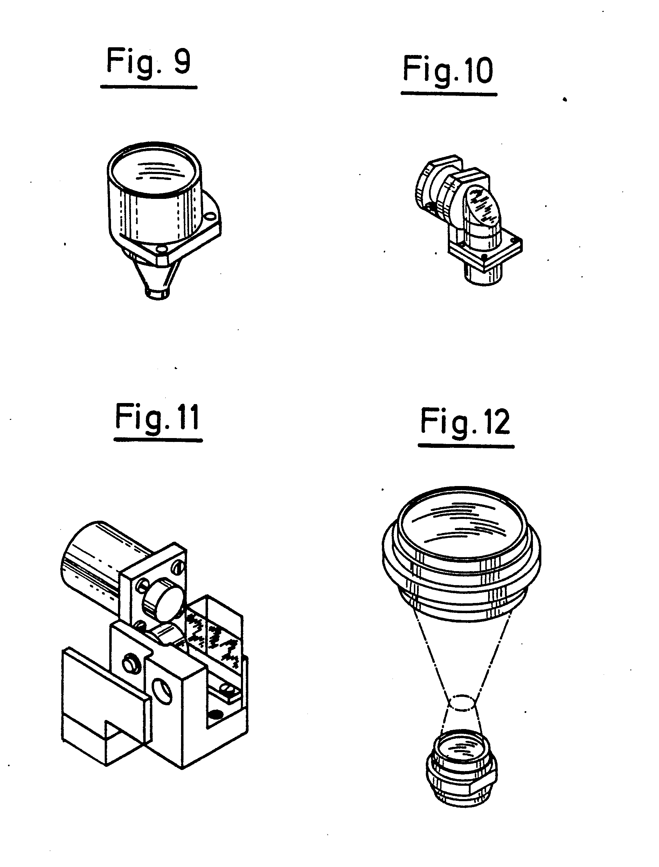

Der Modul (411) Laser-Galilei der Fig. 9 ist ein Fernrohr zur Aufweitung bzw. zur Verringerung der Divergenz eines $CO_2$-Laserstrahles mit 7-facher Aufweitung mit Gehäuse und Befestigungsflansch.

Die Maße sind:

Eintrittspupille      6 mm
Austrittspupille      42 mm
Länge      80 mm
Durchmesser      70 mm

Mit dem in Fig. 10 dargestellten Zielmarkenmodul (451) wird die Zielmarke und die Turmuhr in den Strahlengang eingespiegelt. Er enthält die Strichplatten und die Beleuchtung. Der Antrieb der Zielmarke erfolgt durch den Bildaufrichtemodul.

Die Maße sind:

Länge      85 mm
Breite     60 mm
Höhe       45 mm
Gewicht    0,4 kg

Mit dem in Fig. 11 dargestellten Feldjustiermodul (461) wird die Justierung zwischen Periskop und Waffe im Feldeinsatz überprüft. Das Ausgangssignal des Moduls wird zur automatischen Korrektur der Dejustierungen genutzt. Er enthält optische Systeme für das Finden und Empfangen von Referenzstrahlen.

Die Maße sind:

Länge      70 mm
Breite     58 mm
Höhe       33 mm
Gewicht    0,3 kg

Die Afokalmodule (Fernrohre) in Fig. 12 (511-514) bestehen aus zwei halben Linsenumkehrsystemen, die paarweise angeordnet den Strahlenbündel-Querschnitt verringern. Diese Module sind stets im Mittelteil eines Periskopes angeordnet.

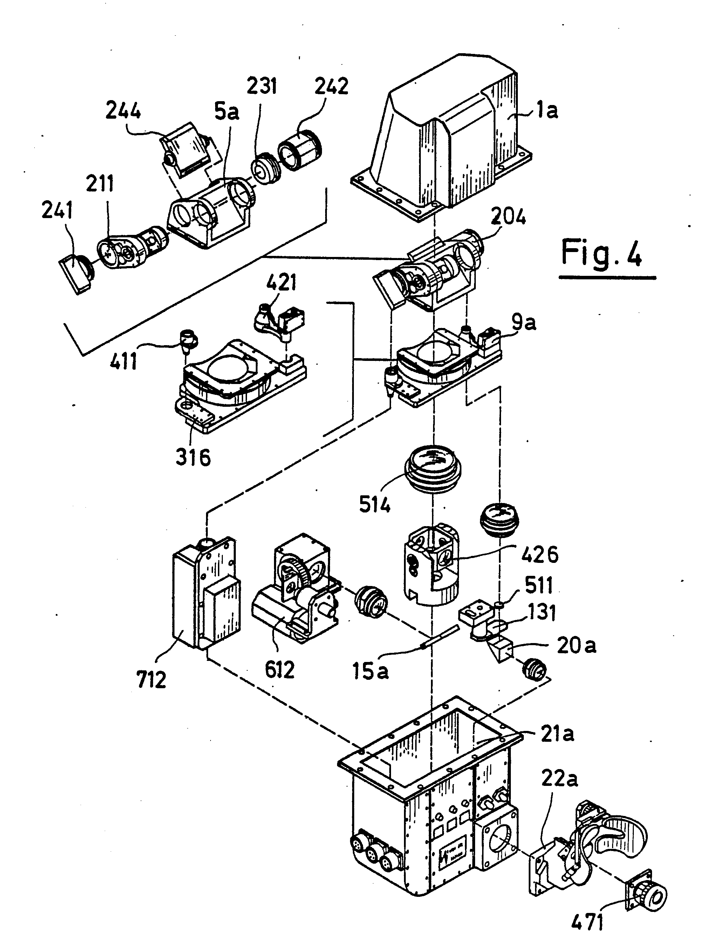

Legende zu Figur 4

| Modulare Komponenten: | Modulnummer: |
|---|---|
| Höhenrichtmodul | 204 |
| Ablenkmodul | 241 |
| Antriebsmodul | 211 |
| Ablenkmodul | 244 |
| Lagermodul | 231 |
| Ablenkmodul | 242 |
| Modul Laser-Galilei | 411 |
| Seitenrichtmodul | 316 |
| Modul V-Wechsler VIS | 421 |
| Modul Afokal | 514 |
| Modul V-Wechsler IR | 426 |
| Wärmebildmodul | 612 |
| Pulslasermodul $CO_2$ | 712 |
| Modul Afokal | 511 |
| Feuerblendenmodul | 131 |
| Okularmodul | 471 |

Nichtmodulare Komponenten:
1    Haube
5    Tragstruktur
9    Höhenrichtbaugruppe
15    Umlenkspiegel
20    Umlenkprisma
21    Gehäuseunterteil
22    Stirnstütze mit Anpaßoptik

**Ansprüche**

1. Sichtgeräte für Kampfwagen, gekennzeichnet durch eine funktionsbezogene, verschleiß-und nachrüstungsorientierte Aufgliederung in Einzelkomponenten (Module) mit standardisierten Schnittstellen, wobei je eine Modulreihe für den Geräteschutz (1), für die Stabilisierung der Visierlinie in Höhe (2), für die Stabilisierung der Visierlinie in Seitenrichtung (3), für die Optikbaugruppen der Tagsichtgeräte (4), für die Optiksysteme der Fernrohre (5), für die Nachtsichtmittel (6), für die Entfernungsmesser (7) und für die Fernsehsysteme (8), und für Zusatzgeräte (9) vorgesehen sind.

2. Sichtgeräte nach Anspruch 1, dadurch gekennzeichnet, daß die Modulreihe für den Geräteschutz (1) aus Schutzhaubenmodulen (11), aus Schutzhaubenantriebsmodulen (12) und aus Blendenmodulen (13) besteht.

3. Sichtgeräte nach Anspruch 1, dadurch gekennzeichnet, daß die Modulreihe für die Stabilisierung der Visierlinie in Höhe (2) aus Modulen für die Höhenrichtachse (20), aus einem Antriebsmodul (21), einem Kreiselmodul (22), einem Gegenlagermodul (23) und aus Ablenkmodulen (24) besteht.

4. Sichtgeräte nach Anspruch 1, dadurch gekennzeichnet, daß die Modulreihe für die Stabilisierung der Visierlinie in Seitenrichtung (3) aus Seitenrichtmodulen (31) und aus Schleifringmodulen (32) besteht.

5. Sichtgeräte nach Anspruch 1, dadurch gekennzeichnet, daß die Modulreihe für die Optikbaugruppen (4) aus einem Modul für die Laseraufweiteoptik (41) und aus Modulen für Vergrößerungswechsler (42), für die Bildaufrichtung (43), die Strahlteilung (44) für die Zielmarke (45), die Feldjustierung (46) und die Okulare (47) und die Fernrohre (51) besteht.

6. Sichtgeräte nach Anspruch 1, dadurch gekennzeichnet, daß die Modulreihe fur die Nachtsichtmittel (6) aus Wärmebildmodulen (61) und Bildverstärkermodulen (62) besteht.

7. Sichtgeräte nach Anspruch 1, dadurch gekennzeichnet, daß die Modulreihe für die Entfernungsmesser (7) aus Modulen für Laser-Sender (71) besteht.

8. Sichtgeräte nach Anspruch 1, dadurch gekennzeichnet, daß die Modulreihe für die Fernsehsysteme (8) aus einem Modul für die Fernsehkamera (81), für den Kameravorsatz (82) und für den Monitor (83) besteht.

9. Sichtgeräte nach Anspruch 1, dadurch gekennzeichnet, daß für Zusatzgeräte Module für ein Zielfernrohr (91) und für einen Winkelspiegel (92) vorgesehen sind.

Fig.1a

Fig. 1

112

122

322

27a

28a

471

**Fig. 2**

## Fig.3a

## Fig. 3

1a

21a

22 a

471

Fig.4

## Fig. 5

## Fig. 6

## Fig. 7

## Fig. 8

## Fig. 9

## Fig.10

## Fig.11

## Fig.12